# EUROPEAN PATENT APPLICATION

(11) **EP 0 593 784 A1**
(43) Date of publication of application: **27.04.1994**
(21) Application number: 93910329.7
(22) Date of filing: 12.05.1993
(51) Int. Cl.: C04B 28/26, C03C 25/02, C09D 1/02, C03C 14/00

(54) **NON-COMBUSTIBLE COMPOSITE MATERIAL STRUCTURE AND PRODUCTION THEREOF**

(30) Priority: 15.05.1992 US 884503
(71) Applicant: DAIDO CO., LTD., Yamato-shi, Kanagawa 242 (JP); Kaempen, Charles E., Orange California 92669 (US)
(72) Inventor: KAEMPEN, Charles, E., Orange, CA 92669 (US)
(74) Representative: Baverstock, Michael George Douglas
(86) International application number: JP9300624
(87) International publication number: WO9323344

(57) **Abstract**

A method of producing a non-combustible composite material structure, which comprises the steps of forming a non-combustible liquid continuous phase matrix by adding and mixing metal oxide powder and liquid soluble silicate, preparing a dispersed phase comprising non-combustible fibers or particles, forming an intermediate structure of a composite material by wetting the dispersed phase by the liquid continuous phase, and drying the intermediate structure to cure the continuous phase and obtaining a solidified non-combustible composite material structure. A preferred method provides a composite material laminate structure of a plurality of layers containing continuous glass fibers oriented in two directions. This composite material structure is available in various forms such as a tube structure, a sheet member, a foamed heat insulating material and a paint coating material.

## Description

### TECHNICAL FIELD

This invention relates to a method and non-combustible composite structure comprising a non-combustible discontinuous phase, such as particles or filament reinforcements, embedded in a non-combustible continuous phase, such as an inorganic hardenable liquid matrix.

### BACKGROUND ART

Composites comprise of one or more discontinuous phases (e.g., filament reinforcements) embedded in a continuous phase, such as a hardenable liquid binding matrix. Composite structures comprising filament reinforcements composed of glass, carbon or other inorganic materials used as the discontinuous phase most commonly also comprise a thermosetting organic resin matrix used as the continuous phase. When heated to temperatures above 800°F (427°C), most thermosetting organic matrix materials will decompose and produce smoke or toxic gases. When heated to temperatures above 1200°F (649°C), glass filament reinforcements will melt. Primarily for these reasons, prior art composite structures comprising glass filaments as the discontinuous phase are unsuitable for making structures that may be exposed to fire or used in the construction of pipe or tanks used to store or convey flammable liquids above ground.

The NFPA (National Fire Protection Association) Code 30 concerns the storage and handling of flammable liquids and requires the use of steel or other non-combustible structural material for above ground fuel storage tanks, above ground refinery pipes and the like. The FAA (Federal Aviation Association) and DOT (Department of Transportation) require that aircraft and railroad interiors be made of materials that will not burn or produce toxic gases when exposed to fire temperatures above 750°F (399°C). Above ground steel tanks corrode and are frequently set afire by lightning strikes or due to carelessness during maintenance and repair of corroded tank sections. Habitable structures made of wood are highly prone to destruction by fire, whereas conventional plastic and resin-impregnated fiberglass structures will produce toxic gases and smoke when exposed to kindling temperatures.

Conventional composite matrix materials used as a continuous phase normally comprise two component thermosetting organic polymers that are relatively expensive and require special care in their shipping, storage and handling. When such organic-based matrix materials constitute an unsaturated polyester or a vinyl ester resin, they usually contain as much as 50%, by weight, of a styrene monomer and must be handled as a flammable liquid. The evaporation of a styrene monomer produces an unusual odor that oftentimes requires ventilation of the working environment. When the selected organic-based matrix material comprises an epoxy resin, care must be taken to prevent the amine curative materials from contacting a workman's skin or from being inhaled. Further, conventional composite matrix materials of the above type require special solvents or other chemicals to clean associated tools and containers.

It has long been thought that soluble silicates are unacceptable for use as the continuous phase in filament-reinforced composites. One reason is that soluble silicates are known to etch glass and harden by dehydration, rather than by polymerization or chemical reaction. The bonding strength and interlaminar shear strength of a hardened soluble silicate is substantially less than that of most plastics and thermosetting resins. Also, unless coated or specially heat treated, hardened soluble silicates will slowly dissolve in water. Further, if the soluble silicate material is hardened by too rapid dehydration, such as by the use of microwave energy or by exposure to temperatures above 150°F (65°C), the resulting composite structure will become extremely brittle and unusable.

The object of the present invention is to provide a non-combustible composite structure whereby the problems of the prior art can be solved and which can readily be produced without fear of generation of smoke or toxic gases and contamination of the working environment and with safety.

### DISCLOSURE OF INVENTION

Applicant has discovered that when a liquid soluble silicate is modified by the addition of certain metal oxides and clays, that the soluble silicate offers structural and chemical desiderata over conventional chemical compositions commonly used to compose the continuous phase matrices for filament reinforced composite structures.

For example, un-impregnated woven and non-woven strands of fiberglass, such as those used as the discontinuous phase of composites combined with a hardenable liquid organic bonding matrix, will melt when heated to 1300°F (704°C). I discovered that when certain liquid soluble silicates are used to impregnate and bond filaments of fiberglass together, that the resulting composite structure remains intact when heated above the melting point of the fiberglass filaments. I also discovered that when the continuous phase of a composite structure comprises a liquid soluble silicate that has been modified by the addition of a small amount of certain metal oxides, the resulting composite structure is substantially less soluble in water if the liquid continuous phase is hardened by a too-rapid dehydration, such as results from exposure to temperatures above 215°F (102°C).

I further discovered that low viscosity soluble silicates readily impregnate and coat filaments of glass or carbon and can be used to make filament wound tubular composite structures. Soluble silicates are less expensive than thermosetting resins, are non-toxic, enable tools and forming equipment to be simply cleaned with water, are environmentally safe, do no pollute the environment when disposed of, are safe to ship and handle, can be easily and safely stored for years, and can be easily hardened by certain dehydration techniques. To applicant's knowledge, no one has heretofore found a practicable way to utilize the desired qualities of soluble silicates as a non-combustible continuous phase for composite structures that also comprise non-combustible filaments or particles as the discontinuous phase.

Thus, an object of this invention is to provide an economical and efficient method for using liquid soluble silicates as the continuous phase matrix material for non-combustible composite structures.

In one aspect of this invention, the method comprises mixing a metallic oxide with a liquid soluble silicate to form a non-combustible liquid continuous phase, preparing a discontinuous phase at least essentially composed of non-combustible continuous filaments or non-combustible inorganic particles, impregnating the discontinuous phase with the liquid continuous phase to form a composite sub-structure, and drying the sub-structure to provide a hardened non-combustible composite structure.

In another aspect of this invention, the composite structure resulting from the above-described method is claimed. As described hereinafter, the term "composite structure" as used herein includes filament wound structures, panels, foam insulation and paintable coatings.

The non-combustible composite structure of the present invention has a melting point of two times higher than that of glass fibers and is useful as various structural materials, heat insulating materials, etc. because of generating no smoke or toxic gases like materials using matrices of organic resin type of the prior art.

According to the method of the present invention, non-toxic, odorless and environmental pollution-free materials are used as raw materials and thus the production operation can be carried out in safe and easy manner, while devices and apparatus used therefor can readily be cleaned. Furthermore, there can be obtained a large merit that the raw material, depending on the composition thereof, can be hardened at room temperature.

The material of the present invention, as described above, has very high commercial utility value because it has not been developed up to the present time.

### BRIEF DESCRIPTION OF THE DRAWINGS

Figure 1 illustrates a plurality of twined filament strands adapted to comprise a discontinuous phase of non-combustible composite structure when impregnated with a hardenable liquid continuous phase;
Figure 2 illustrates a plurality of the twined filament strands having a longitudinally centered flexible structure disposed therein;
Figure 3 is a partially sectioned isometric view illustrating a non-combustible composite structure in the form of a multi-ply composite pipe.
Figure 4 is a sectional view illustrating a joint structure for mechanically coupling adjacent ends of a pair of the composite pipes together;
Figure 5 is an enlarged isometric view partially illustrating longitudinally oriented matrix-impregnated twined strands of the joint structure in Figure 4; and
Figure 6 schematically illustrates apparatus for forming and hardening circumferentially oriented matrix-impregnated strands comprising the joint structure in Figure 4.

### BEST MODES FOR CARRYING OUT THE INVENTION

The liquid soluble silicate used in the present invention is an aqueous solution having an SiO₂/Na₂O weight ratio of 2 to 4 and a specific gravity of 40 to 42.2 Baume degree (1.37 to 1.41 g/cm³) at room temperature (20°C). The metallic oxide includes zinc oxide, titanium oxide, iron oxide, etc. and is suitably added the above described liquid soluble silicate in a proportion by weight of 1 to 10%, preferably 4 to 8%. Examples of the non-combustible continuous filaments for composing the non-combustible discontinuous phase are glass fibers, carbon fibers, ore fibers such as basalt fibers, etc. and examples of the non-combustible particles are ore powders such as clay powders, etc. and foamed ore particles such as foamed perlite, foamed vermiculite, etc.

The mixing ratio of the continuous phase and discontinuous phase can suitably be determined depending upon the properties of raw materials used, the variety of the aimed composite material structure, the production conditions, etc. As a standard, the proportion of the discontinuous phase in the mixture is preferably 30 to 70% by volume when the discontinuous phase is in the form of fibers and preferably 5 to 40% by weight when the discontinuous phase is in the form of a powder like coating materials.

I discovered that when certain soluble silicates are mixed and blended with 5% by weight of powdered zinc oxide to form a liquid composition and heated to 250°F (120°C) to dehydrate it, the resulting hardened material thus formed was very brittle, but substantially less soluble in water. It was then determined that this liquid composition could be adapted for use as a binder for expanded perlite or expanded vermiculite particles from which a high temperature, non-combustible and water-resistant composite insulation could be made. Such an insulation has commercial application for fire doors or above-ground composite pipes and tanks.

I further discovered that when laminate plies or ribbons containing glass filaments (discontinuous phase) are impregnated with a liquid soluble silicate (continuous phase) and then exposed to hot air blown over their surfaces, that they will bond together to form a multiple-ply non-combustible composite structure. It was further determined that such a structure could be used as a constituent to form filament-wound pipes, pressure vessels, and tanks used to store or convey non-flammable and flammable liquids or gases.

I also discovered that certain liquid soluble silicates have sufficiently low viscosities to enable them to easily impregnate a twine of continuous filaments or the filament yarns comprising a tightly woven glass fabric. I further discovered that such silicates are useable as a continuous phase constituent for a composite structure of the type disclosed in my co-pending U.S. Patent Application Serial No. 838,463, filed on February 26, 1992 for "Double-Wall Composite Pipe and Coupling Structure Assembly and Method and Apparatus for Making Same," the disclosure of which is incorporated by reference herein. In particular, certain low viscosity liquid soluble silicates were found to provide an ideal matrix material for rendering the type of permeable composite pipe annulus structure described in the referenced patent application non-combustible, e.g., exhibiting a burning point exceeding 1,000°F (538°C). The soluble silicate matrix can also be used with filaments of carbon to make a non-combustible composite structure capable of resisting temperatures greater than the 2000°F (1076°C).

A further discovery was that when ceratin liquid soluble silicate matrix materials are slowly hardened by dehydration at temperatures less than 150°F (65°C), that a filament-reinforced composite structure will retain a substantial portion of the tensile strength of the filament reinforcements. When constructed as a composite structure, such as the type described in my U.S. Patent No. 3,784,441, issued on January 8, 1974 for "Composite Structure," use of the soluble silicate matrix enables construction of a high tensile strength electrical insulator that will not produce a carbon path should surface arcing occur.

When exposed to air, soluble silicate liquids harden by dehydration. I discovered that the shelf life and the useful "pot life" of a liquid soluble silicate was increased by many months when a small amount of Dow Silicone 200 fluid, having a viscosity of approximately 10 centistokes, was added to the liquid soluble silicate. This oil-like film of silicone fluid was found to float on the surface of the liquid matrix mixture, that primarily consisted of a liquid soluble silicate, to provide an impervious air barrier. The air barrier inhibited dehydration and the formation of a hardened silicate film or skin that would otherwise alter the viscosity, as well as the filament wet-out and impregnation properties of the liquid soluble silicate.

The many advantages for using a silicate-based matrix for reinforced composite structures include: the formation of a non-combustible composite having a melting temperature more than double the melting temperature of fiberglass; reducing liquid matrix costs to less than the cost of any conventional thermosetting resin; providing completely non-toxic work environments; simplifying the disposal of any waste liquid matrix material; providing a non-flammable matrix material that is odorless, non-polluting and environmentally safe; enabling matrix coaters and matrix handling equipment to be cleaned expeditiously and simply with only the use of water; using a single-component matrix system that does not require mixing; and providing a matrix that hardens in warm dry air or at ambient room temperatures.

In its broadest aspect, the method for making a non-combustible composite structure comprises: mixing and blending a metallic oxide with a liquid soluble silicate to form a non-combustible liquid continuous phase, preparing a discontinuous phase at least essentially composed of non-combustible continuous filaments or non-combustible inorganic particles, impregnating and wetting the discontinuous phase with the liquid continuous phase to form a composite sub-structure, and drying the composite sub-structure to harden the continuous phase to form the hardened non-combustible composite structure. The mixing and blending step preferably comprises adding about from 1.0% to 5%, by weight, of the continuous phase, of the metallic oxide to the liquid soluble silicate. The adding step may comprise adding powdered rutile grade titanium dioxide, zinc oxide powder, and/or iron oxide powder to the liquid soluble silicate. The liquid soluble silicate preferably has a viscosity of about 60 to 400 centipoise, a density of about 40.0 to 42.2 degrees Baume (about 1.37 to 1.41 g/m³), and a pH of about 11.3.

Appropriate amounts of powdered kaolin clay (e.g., 5.0% to 40.0%, preferably 10 to 40% by weight, of the liquid soluble silicate) can be admixed with one or more powdered metallic oxides before they are mixed with the liquid continuous phase to provide a paintable non-combustible composite structure or coating having the desired degree of viscosity and thixotropy. Such paintable coatings can be colored by combinations of iron oxide or other metallic oxides. Kaolin (Al₂O₃ *2H₂O) is the primary ingredient of most clays, some of which contain lime, alkalies, organic materials and other impurities. When mixed with a liquid soluble silicate the clay does not dissolve, but is held in a colloidal solution. When the liquid soluble silicate hardens, the clay-containing mixture becomes hard and exhibits considerable compressive strength as the clay exhibits the property of a reversible colloid.

The above preparing step preferably comprises preparing a discontinuous phase composed of glass or carbon filaments comprising about 30% to 70%, by volume, of the composite structure. When used, the glass filaments are preferably made from E glass having a diameter of about 3 to 25 microns and are formed into strands having a length to weight yield of about from 50 to 675 yards per pound.

The drying step preferably comprises exposing the composite sub-structure to a temperature of about from 65°F (18°C) to 150°F (66°C) to accelerate dehydration and hardening of the continuous phase. The exposing step may comprise blowing hot air onto the composite sub-structure until it is suitably solidified.

As suggested above, the method may also comprise adding an anti-hardening agent to the liquid continuous phase having a specific gravity lower than that of the liquid soluble silicate. In the preferred method, the adding step comprises adding a silicone fluid to the liquid in an amount sufficient to form a thin air-impervious film of silicone oil on the surface of the liquid continuous phase. The preferred silicone fluid is Dow 200 (commercial name) polydimethylsiloxane silicone fluid having a viscosity of about from 10 to 100 centistokes.

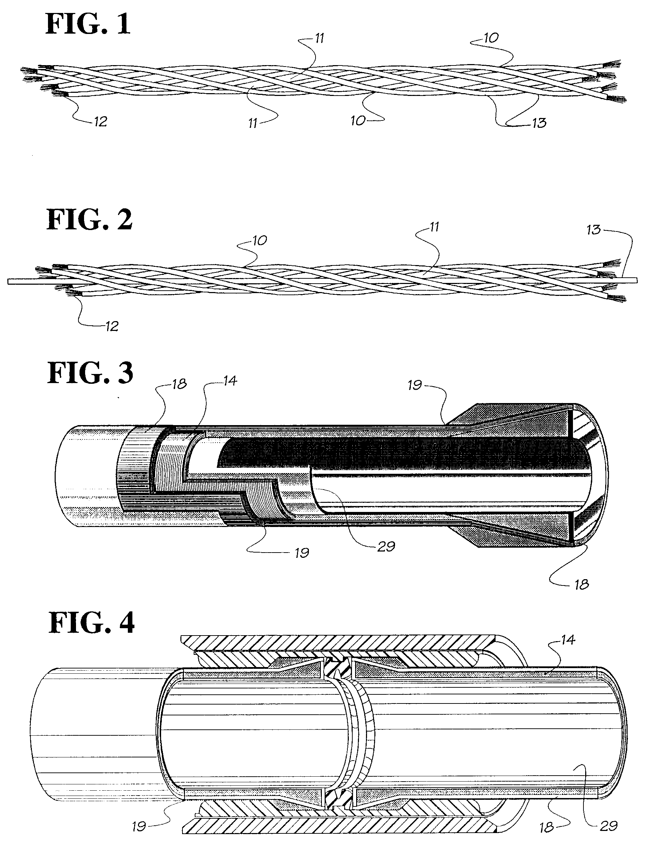

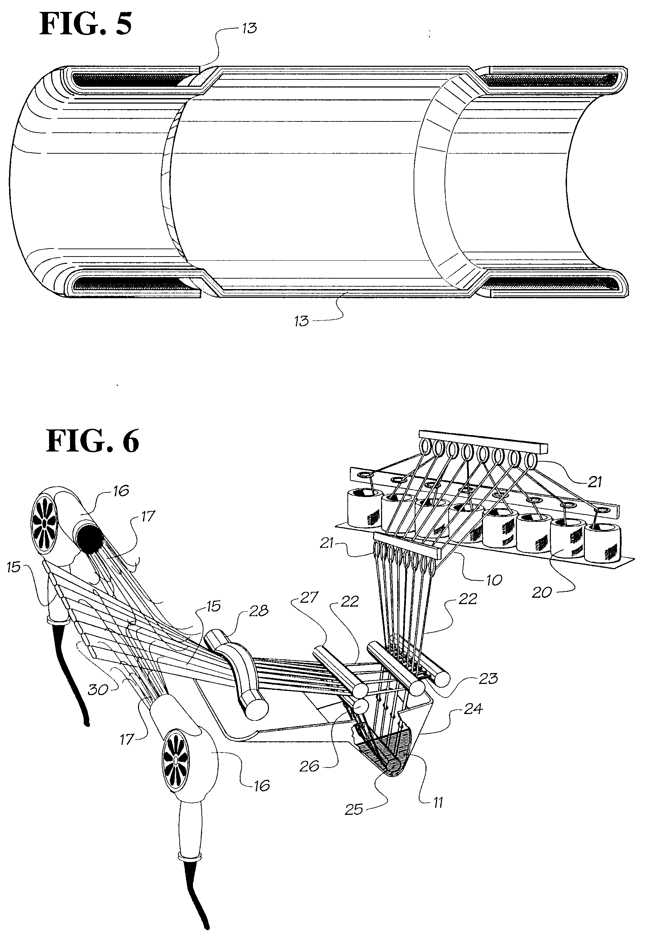

Figures 1 and 2 illustrate application of the method of this invention to commercial products and contemplates providing and intertwining a plurality of filament strands 10 to form the discontinuous phase with the impregnating and wetting step comprising impregnating, with a liquid matrix 11 (continuous phase), individual filaments 12 in the plurality of filament strands. Figures 3 to 5 illustrate that the method further contemplates placing impregnated twined strands 13 on a forming surface to form a first ply 14. Figure 6 illustrates that the drying step preferably comprises exposing at least one surface 15 of impregnated twined strands 13 to a curing temperature of approximately 150°F (66°C). One method by which this can be achieved is by using hot air blowers 16 to blow heated air 17 over composite structure surface 15 to accelerate the dehydration and hardening of liquid continuous phase 11 to form a matrix bonding twined strands 13 together.

An extension of the method includes repeating the above intertwining and impregnating and wetting steps to form a second ply 18 of impregnated twined strands 13 and placing second ply 18 on first ply 14 to form a multi-ply composite structure 19, such as illustrated in Figures 3, 4 and 5. As shown in these figures, the placing step may comprise placing second ply 18 transversely across first ply 14 to biaxially orient the strands of the first and second plies relative to each other. More preferably, the placing step comprises orienting filament strands 10 of the first and second plies at least approximately perpendicular relative to each other.

### Examples

The present invention will be illustrated in detail by the examples.

### EXAMPLE 1

Referring to Figures 1 to 6, various non-combustible composite structures were formed to comprise a discontinuous phase composed of glass filament reinforcements 10. The discontinuous phase was then impregnated with a continuous phase composed of a hardenable liquid matrix 11. The continuous phase comprise the following proportions, by weight and was impregnated so that the sum of the discontinuous phase and continuous phase be 100 parts:
20.0 parts of a liquid soluble silicate having a viscosity of 100 centipoise, a density of 1.37 g/cm³ (40.0⁰ Baume), and a pH of 11.3. (Tradename: "PQ soluble silicate," Product Name: "Sodium Silicate Solution E" manufactured by Industrial Chemicals Division of the PQ Corporation),
1.0 part of a powdered rutile grade titanium dioxide, (Tradename: "Tioxide"), and
0.02 parts of polydimethylsiloxane having a viscosity of 10 centistokes (Tradename: "Dow Corning 200 Fluid," manufactured by Dow Corning Corporation).

Following the step of impregnating the glass filament reinforcements with the liquid matrix, the composite structure was hardened by exposing the surface to ambient air having a relative humidity of less than 80% and a temperature of approximately 75°F. This procedure was followed in making a non-combustible composite panel structure from woven fiberglass cloth having a thickness in the range of from 0.020 to 0.080 ins. (0.5 to 2.0 mm).

### EXAMPLE 2

A non-combustible pipe structure was made by a procedure similar to that illustrated in Figure 6. Strands 10 of continuous filament fiberglass roving were pulled from center-pull packages 20 and passed through strand guides 21 to make dry strand 22 that were then guided by strand guides 23 into a coater pan 24 filled with a liquid matrix 11 where the strands 22 were impregnated. The liquid matrix was identical to that described in Example I, above. Strands 22 were then passed under a coater impregnation bar 25, over a ribbon forming bar 26, through ribbon squeegee bars 27 and under a ribbon width control bar 28 from which the ribbon was guided to and placed upon a forming surface. Prior to being placed upon the forming surface, strand ribbon 30 moved past hot air blowers 16 so that both the upper and lower surfaces 15 of the ribbon were briefly exposed to heated air, having a blower exit temperature of approximately 450°F (196.7°C).

The ribbon surface temperature was not permitted to exceed a temperature above 150°F (65.6°C) to assure that the liquid matrix would not boil or dehydrate too rapidly. The thickness of strand ribbon 30 was approximately 0.020 in. (0.5 mm). Ten wraps of the strand ribbon were used to make a composite cylinder approximately 0.20 in. thick. It was found that by using hot air blowers to dehydrate and harden the liquid matrix composition, that the multiple ply composite laminate was sufficiently hard immediately after fabrication to enable it to be removed from the cylindrical forming surface.

### EXAMPLE 3

A non-combustible composite syntactic foam structure was made by using expanded perlite as the discontinuous phase and the following mixture as the liquid continuous phase, by weight:
20.0 parts of a liquid soluble silicate having a viscosity of 100 centipoise, a density of 1.37 g/cm³ (40.0⁰ Baume) and a pH of 11.3 (Tradename: PQ Soluble Silicate," Product Name: "Sodium Silicate Solution E" manufactured by Industrial Chemicals Division of the PQ Corporation), and
1.0 part of powdered zinc oxide
The preferred form of expanded perlite recommended for use as a non-combustible syntactic foam thermal insulation is termed "Coarse Agricultural Grade - Uncoated" was used in this example. The dry perlite was added to the liquid matrix and mixed with a suitable blender until it had the consistency of bread dough. The mixture was then poured into a mold and placed in an oven heated to 275°F (135°C). After two hours in dry air heated to at least 250°F (121°C), the composite matrix had hardened to provide a non-combustible syntactic foam that did not dissolve or disintegrate when immersed in water for many days.

This non-combustible composite thermal insulation can be used to make roofing shingles, enclose furnaces, steam transfer tubes, as well as to provide sound insulation and fire protection to fiberglass fume and air conditioning ductwork. When placed between plywood or fiberglass panels, this insulation can be used to make fire walls and fire doors.

### EXAMPLE 4

A white paintable non-combustible composite structure or coating material was made by using clay particles as the discontinuous phase and the following mixtures as the continuous phase, by weight:
14.0 parts of a liquid soluble silicate having a viscosity of 100 centipoise, a density of 1.37 g/cm³ (40.0⁰ Baume), and a pH of 11.3 (Tradename: "PQ Soluble Silicate," Product Name: "Sodium Silicate Solution E" manufactured by Industrial Chemicals Division of the PQ Corporation);
1.0 part of a powdered rutile grade titanium dioxide, (Tradename: "Tioxide"), and
0.02 parts of polydimethylsiloxane having a viscosity of 10 centistokes (Tradename: "Dow Corning 200 Fluid" manufactured by Dow Corning Corporation.)
This discontinuous phase portion of the composite coating consisted of Kaolin Clay of 200 micro fineness (Tradename: "Thiele RC 32," manufactured by John K. Bice Co.). Approximately 4.0 parts, by weight, of the dry discontinuous phase was added to 15.02 parts, by weight, of the liquid continuous phase and thoroughly mixed. The resulting white liquid composition was then painted upon various clean wood surfaces to provide a white prime coat that prevented the wood surface from being ignited by a 2000°F (1093°C) flame from a butane torch. The non-combustible composite prime coat was seen to intumesce and thereby provide an improved fire insulation to the wood surface. The composite prime coat was also found to be paintable and compatible with many water-based indoor and outdoor alkyd paints.

### INDUSTRIAL APPLICABILITY

The liquid composition of this invention provides a safe, fireproof, non-toxic, odor-free and low viscosity inorganic continuous phase composite matrix that can be used to substantially increase the temperature resistance of conventional fiberglass and other types of suitable materials. The composition can be applied, without the need for ventilation, by brush, roller, or spray equipment. It can be used as a filament winding matrix to make fire-resistant composite pipe and tank structures. When combined with continuous or woven filament reinforcements it can be molded, pultruded or used as a lay-up matrix. When combined with expanded perlite or vermiculite, it can serve as the continuous phase bonding matrix of a non-combustible composite insulation. When combined with finely ground particles of clay, rock or sand it can serve as the hardenable liquid matrix of a paintable fire-resistant non-combustible composite coating.

The liquid composition of this invention can be shipped and stored in a standard plastic container. It has a shelf life of at least five years when covered and stored at temperatures below 150°F (66°C). It can be used to make smoke-free fireproof interior aircraft composite structures and indoor housing structures and furniture that do not emit smoke or toxic gases when exposed to fire. The non-combustible composite materials of this invention are unaffected by styrene monomers, petroleum liquids, uncured polyester and epoxy plastics, and such non-polar solvents as methylene chloride. Except for certain syntactic foam thermal insulations, the non-combustible composites of this invention should be enclosed by an impermeable water-resistant coating or structure if it is anticipated they will be continuously in contact with water, acids, alcohols or food products.

Other industrial applications for the composite structure utilizing the composition as a matrix include: high tensile strength non-frangible composite electrical insulators that do not produce a carbon path when an electric arc passes over the structure's exterior; structural containers for refractory insulations possessing temperature resistance to at least 2000°F (1093°C) while remaining structurally competent; foundry molds for containing molten metals; and non-combustible carbon-fiber composites, such as those used for gun barrels, mortar and bazooka missile launch tubes, rocket booster cases, solid propellant rocket nozzles; etc.

## Claims

1. A method for making a non-combustible composite structure comprising the steps of
mixing and blending a metallic oxide with a liquid soluble silicate to form a non-combustible liquid continuous phase,
preparing a discontinuous phase at least essentially composed of non-combustible continuous filaments or non-combustible inorganic particles,
impregnating and wetting said discontinuous phase with said liquid continuous phase to form a composite sub-structure, and
drying said composite sub-structure to harden said continuous phase to form a hardened non-combustible composite structure.

2. The method of claim 1 wherein said mixing and blending step comprises adding about 1 to 10%, by weight of said continuous phase, of said metallic oxide in powder form to said liquid soluble silicate.

3. The method of claim 2 wherein said adding step comprises adding powdered rutile grade titanium dioxide to said liquid soluble silicate.

4. The method of claim 1 wherein said preparing step comprises preparing a discontinuous phase at least essentially composed of non-combustible inorganic particles smaller than about 5 microns.

5. The method of claim 2 wherein said adding step comprises adding iron oxide powder to said soluble liquid silicate.

6. The method of claim 1 wherein said preparing step comprises providing a liquid soluble silicate having a pH of about 11.3 and a viscosity in the range of about from 60 to 400 centipoise.

7. The method of claim 1 wherein said preparing step comprises providing a liquid soluble silicate consisting of a sodium silicate solution having a SiO₂/Na₂O weight ratio of 2 to 4 and a density at 68°F of about 40 to 42.2 degrees Baume (1.37 to 1.41 g/cm³).

8. The method of claim 2 wherein said mixing and blending step comprises adding about 1 to 10 percent, by weight of said continuous phase, of zinc oxide to said liquid soluble silicate.

9. The method of claim 1 wherein said preparing step comprises preparing a discontinuous phase composed of filaments of glass or carbon or basalt comprising from about 39% to 70%, by volume, of said composite structure.

10. The method of claim 9 wherein said preparing step comprises preparing a discontinuous phase composed of glass filaments each having a diameter from about 4 to 25 microns.

11. The method of claim 10 wherein said preparing step comprises providing glass filaments formed into strands having a length to weight yield of from about 50 to 675 yards per pound (about 730 to 9900 tex).

12. The method of claim 1 wherein said preparing step comprises preparing a discontinuous phase composed of non-combustible inorganic particles.

13. The method of claim 12 wherein said preparing step comprises preparing a discontinuous phase composed of particles of expanded perlite or expanded vermiculite.

14. The method of claim 13 wherein said drying step comprises exposing said composite sub-structure to air having a temperature of about from 250°F to 275°F (121.1°C to 135°C) and a relative humidity less than about 90 percent.

15. The method of claim 1 wherein said drying step comprises exposing the wet surfaces of said composite sub-structure to heated air so that the temperature of said sub-structure surface matrix is at least approximately between 100°F (38°C) and 150°F (66°C).

16. The method of claim 15 wherein said exposing step comprises blowing hot air onto opposing surfaces of said composite sub-structure.

17. The method of claim 2 wherein said adding step further comprises adding to said liquid continuous phase 10 to 40%, by weight of said liquid soluble silicate, and a powdered kaolin clay having about 200 micron fineness.

18. The method of claim 1 wherein said adding step comprises adding to said liquid continuous phase an anti-hardening surfacing agent having a specific gravity lower than that of said liquid soluble silicate.

19. The method of claim 18 wherein said adding step comprises adding to said liquid continuous phase a polydimethylsiloxane silicone fluid having a viscosity of about 10 centistokes in an amount sufficient to form a thin air-impervious film of said silicone fluid on the surface of said liquid continuous phase.

20. The method of claim 1 wherein said preparing step comprises providing a plurality of filament strands to form said discontinuous phase and said impregnating and wetting step comprises impregnating said plurality of filament strands with said liquid continuous phase.

21. The method of claim 20 further comprising intertwining at least three of said filament strands together prior to said impregnating and wetting step to form impregnated twined strands comprising said discontinuous phase.

22. The method of claim 21 further comprising forming said impregnated twined strands into a flat ribbon approximately 0.5 mm thick.

23. The method of claim 21 further comprises forming said impregnated twined strands into a cord having a diameter from about 0.5 mm to 12 mm.

24. The method of claim 21 further comprising placing said impregnated twined strands on a forming surface to form a first ply.

25. The method of claim 24 wherein said drying step comprises bringing the surface temperature of said impregnated twined strands to a temperature at least approximately between 65°F to 150°F (18°C to 65°C) so that said liquid continuous phase hardens to form a matrix bonding said strands together.

26. The method of claim 24 further comprising repeating said intertwining and impregnating and wetting steps to form a second ply on said first ply to form a multi-ply composite structure.

27. The method of claim 26 wherein said placing step comprises placing said second ply transversely across said first ply to biaxially orientate the strands of said first and second plies relative to each other.

28. The method of claim 27 wherein said placing step comprises orientating the strands of said first and second plies at least approximately perpendicular relative to each other.

29. A non-combustible composite structure made in accordance with the method steps set forth in each of method claims 1 through 28.

30. A non-combustible water-insoluble syntactic foam thermal insulation made in accordance with the method steps set forth in method claim 14.

31. A liquid non-combustible paintable coating material made in accordance with the method steps set forth in method claim 4.

32. A non-combustible paintable surface coat made in accordance with the method steps set forth in method claim 4.
